# EUROPÄISCHE PATENTANMELDUNG

(11) **EP 2 582 018 A1**
(43) Veröffentlichungstag der Anmeldung: **17.04.2013**
(21) Anmeldenummer: 11185271.1
(22) Anmeldetag: 14.10.2011
(51) Int. Cl.: H02K 3/40

(54) **Stator einer elektrischen Maschine mit durchgängigem Außenglimmschutz**

(71) Anmelder: Siemens Aktiengesellschaft, 80333 München (DE)
(72) Erfinder: Brockschmidt, Mario, 45131 Essen (DE); Kempen, Stefan, 44388 Dortmund (DE); Pohlmann, Friedhelm, 45355 Essen (DE); Schmidt, Guido, 42799 Leichlingen (DE); Staubach, Christian, 45768 Marl (DE)

(57) **Zusammenfassung**

Es wird ein besonders einfach herzustellender, aber dennoch durchschlag- oder teilentladungsfester Stator (2) für eine elektrische Maschine (1) angegeben. Der Stator (2) umfasst ein Blechpaket (4), in welches mindestens eine erste und eine zweite Nut (5,6) eingebracht ist, sowie eine Leiterschleife (11), welche einen von einer Hauptisolierschicht (25) ummantelten leitfähigen Kern (10) umfasst. Die Leiterschleife (11) wird gebildet durch einen ersten Nutabschnitt (14), welcher in der ersten Nut (5) des Blechpakets (4) einliegt, durch einen zweiten Nutabschnitt (16), welcher in der zweiten Nut (6) des Blechpakets (4) einliegt, sowie durch einen die beiden Nutabschnitte (14,16) miteinander verbindenden Wickelkopfabschnitt (20), welcher aus dem Blechpaket (4) herausragt. Die Hauptisolierschicht (25) der Leiterschleife (11) ist sowohl im Längenbereich der beiden Nutabschnitte (14,16), als auch im Längenbereich des Wickelkopfabschnitts (20) mit einer durchgehenden elektrisch leitfähigen Schicht (26) ummantelt.

## Beschreibung

Die Erfindung bezieht sich auf einen Stator für eine elektrische Maschine. Die Erfindung bezieht sich weiterhin auf eine elektrische Maschine mit einem solchen Stator.

Mit dem Begriff "elektrische Maschine" ist allgemein ein Energiewandler bezeichnet, der zwischen elektrischer und mechanischer Energie wandelt, nämlich ein elektrischer Motor oder ein Generator. Eine solche elektrische Maschine umfasst üblicherweise einerseits einen ortsfesten Stator (oder Ständer) sowie einen rotierenden Rotor (oder Läufer). Bei der elektrischen Maschine handelt es sich insbesondere um einen Turbogenerator, welcher in einem Kraftwerk zur Umwandlung von mechanischer in elektrische Energie dient.

Ein Turbogenerator ist derzeit meist als dreisträngige Drehstrom-Synchronmaschine mit einem massiven zwei- oder vierpoligen Läufer realisiert. Der Leistungsbereich eines solchen Turbogenerators reicht typischerweise von ca. 20 MVA bis ca. 2000 MVA.

Der Stator eines üblichen Synchrongenerators umfasst eine Vielzahl von sogenannten Ständerwicklungen, in welchen durch induktive Wechselwirkung mit dem rotierenden, mit einem konstanten Strom beaufschlagten Rotor eine Wechselspannung induziert wird. Die Statorwicklungen sind in einem sogenannten Blechpaket aufgenommen. Dieses dient unter anderem zur Führung und Verstärkung des magnetischen Feldes. Zur Verringerung von Verlusten durch Wirbelströme ist das gesamte Blechpaket aus dünnen, gegeneinander isolierten Blechen aufgebaut. Die Statorwicklungen bestehen aus einer Vielzahl von Stäben, deren jeweilige Mittelstücke (der sogenannte "Aktivteil") in Nuten des Blechpakets eingelegt sind. Die einzelnen Stäbe treten am sogenannten "Wickelkopf" evolventenförmig aus den Nuten aus. Dort sind die einzelnen Stäbe zur Statorwicklung verschaltet (d.h. miteinander kontaktiert).

Die im Blechpaket einliegenden Stäbe bzw. Stabbereiche liegen auf hohem elektrischem Potential und sind daher untereinander, sowie gegen das geerdete Blechpaket durch eine Hauptisolierschicht elektrisch isoliert.

Um bei Betriebsspannungen von einigen Kilovolt (kV) Teilentladungen zu vermeiden, ist die Hauptisolierschicht üblicherweise mit einer inneren und einer äußeren Leitschicht gegen Hohlräume und Ablösungen abgeschirmt. Die innere Leitschicht ist als "innere Potentialsteuerung" (IPS) bezeichnet und liegt auf dem Potential des Stabes. Die äußere Leitschicht ist als "Außenglimmschutz" (AGS) bezeichnet und liegt auf Erdpotential. Das elektrische Potential wird in der Hauptisolierschicht ausgehend von der IPS in radialer Richtung bis zum AGS abgebaut.

Üblicherweise endet der Außenglimmschutz im Austrittsbereich, in dem der jeweilige Stab aus der zugehörigen Nut austritt, während die Hauptisolierschicht außerhalb der Nut weitergeführt wird. Diese Anordnung stellt in Bezug auf die elektrische Festigkeit eine kritische Stelle dar, da sich im Wickelkopfbereich zwischen der in einem festen Aggregatzustand vorliegenden Hauptisolierschicht und einem umgebenden gasförmigen Fluid (meist Luft oder Wasserstoff) eine Grenzschicht ausbildet.

Durch die sich zwischen der Hauptisolierung und dem Fluid bildende dielektrische Trennfläche entsteht eine typische Gleitanordnung, die neben einer rein radialen Feldkomponente, wie sie im Bereich des Blechpakets vorkommt, zusätzlich eine tangentiale (d.h. innerhalb der Trennfläche, insbesondere aber etwa parallel zur Längserstreckung des Leiters verlaufende) Feldkomponente aufweist.

Die dadurch tangential beanspruchte Grenzfläche stellt eine besondere Schwachstelle in einer Isolieranordnung dar. Aufgrund der geringen elektrischen Festigkeit von Luft oder Wasserstoff kann es schon bei einer vergleichsweise geringen Spannung zum Einsatz einer Teilentladung, bedingt durch die lokale tangentiale Feldstärkeerhöhung (ca. 0,64 kV/mm bei sauberer Oberfläche) kommen, die sich bei einer weiteren Steigerung der Spannung zu Gleitentladungen entlang der Isolierstoffoberfläche bis zu einem elektrischen Durchschlag (d.h. einem Leiter-Erde-Kurzschluss) ausweiten kann.

Diese kritische Belastung tritt vor allem während der Prüfung des Generators auf, da der Generator zu Prüfungszwecken regelmäßig an die Belastungsgrenze gefahren wird. Durch die Ausbildung von Gleitentladungen an der Oberfläche wird der Isolierstoff langfristig zerstört.

Die größte Feldstärke tritt dabei am Ende des Außenglimmschutzes auf. Daher ist es häufig erforderlich, für eine Feldsteuerung am Ende des Außenglimmschutzes und für eine Festigkeitserhöhung in der Umgebung der freiliegenden Hauptisolierschicht zu sorgen.

Dies wird üblicherweise durch die Herstellung eines sogenannten Endenglimmschutzes erreicht. Dabei werden zur Unterdrückung von Gleitentladungen üblicherweise resistive Potentialsteuerungen durch halbleitende Lacke oder Bänder vorwiegend auf der Basis von Siliziumkarbid oder anderen elektrisch halbleitenden Füllstoffen eingesetzt. Ziel der Potentialsteuerung ist es, den tangentialen Potentialabbau entlang der Isolierstoffoberfläche zu vergleichmäßigen. Hierfür wird ein in axialer Richtung ortsabhängiger und spannungsabhängiger Widerstandsbelag hergestellt. Ein derartiger Endenglimmschutz ist jedoch vergleichsweise zeit- und kostenintensiv herzustellen.

Der Erfindung liegt die Aufgabe zugrunde, einen besonders einfach realisierbaren, dennoch aber durchschlag- oder teilentladungsfesten Stator für eine elektrische Maschine sowie eine elektrische Maschine mit einem solchen Stator anzugeben.

Bezüglich des Stators wird die Aufgabe erfindungsgemäß gelöst durch die Merkmale des Anspruchs 1. Demnach umfasst der Stator ein Blechpaket, in welches mindestens eine erste und eine zweite Nut eingebracht ist. Der Stator umfasst zudem mindestens eine Leiterschleife, welche einen leitfähigen Kern umfasst, der in seinem gesamten Längenbereich mit einer Hauptisolierschicht ummantelt ist. Die Leiterschleife ist der Länge nach in unterschiedliche Abschnitte unterteilt, nämlich
- in einen ersten Nutabschnitt, welcher in der ersten Nut des Blechpakets der elektrischen Maschine einliegt,
- in einen zweiten Nutabschnitt, welcher in der zweiten Nut des Blechpakets der elektrischen Maschine einliegt, sowie
- in einem die beiden Nutabschnitte verbindenden, d.h. zwischen den beiden Nutabschnitten außerhalb des Blechpakets liegenden Wickelkopfabschnitt.

In anderen Worten tritt die Leiterschleife am Übergang zwischen dem ersten Nutabschnitt aus der ersten Nut des Blechpakets aus, durchläuft außerhalb der Nut den Wickelkopfabschnitt und tritt am Übergang zum zweiten Nutabschnitt in die zweite Nut des Blechpakets ein.

Die Hauptisolierschicht der Leiterschleife ist hierbei sowohl in den beiden Nutabschnitten, als auch in dem Wickelkopfabschnitt mit einer durchgehenden elektrisch leitfähigen Schicht ummantelt. Diese Schicht wirkt in den Bereichen der Nutabschnitte als Außenglimmschutz (oder Außenpotentialsteuerung) und ist infolge ihrer Fortsetzung über den Wickelkopfabschnitt nachfolgend auch als "durchgängiger Außenglimmschutz" bezeichnet. Die elektrisch leitfähige Schicht umschließt die Hauptisolierung insbesondere vollumfänglich und ununterbrochen.

Die elektrisch leitfähige Schicht ist dabei vorzugsweise durch Einbettung von halbleitenden Füllstoffen mit einer vergleichsweise geringen elektrischen Leitfähigkeit, bevorzugt in einem Bereich von etwa 5 bis 35 S/m (vor Tränkung) behaftet. In bevorzugter Dimensionierung weist die elektrisch leitfähige Schicht eine Schichtdicke von etwa 0,1 bis 0,2 mm auf.

Durch die durchgehende Ausführung der elektrisch leitfähigen Schicht bzw. des Außenglimmschutzes wird vorteilhafterweise in dem Wickelkopfabschnitt die Ausbildung einer Gleitanordnung sicher unterbunden, so dass dort auf die Verwendung eines Endenglimmschutzes verzichtet werden kann. Der erfindungsgemäße Stator ist daher vergleichsweise einfach herzustellen, ohne dass dies zu Lasten der Durchschlagfestigkeit ginge.

Vorteilhafterweise treten bei Verwendung eines erfindungsgemäßen Stators im Bereich des Wickelkopfes nur radiale Feldkomponenten über der Hauptisolierschicht auf, der umgebende Bereich (beispielsweise Luft) ist aus elektrischer Sicht feldfrei. Hierdurch können vorteilhafterweise einzuhaltende Luftabstände und Kriechwege reduziert werden, wodurch der Wickelkopf und somit der gesamte Stator vergleichsweise kompakt konstruiert werden kann. Der Stator kann somit quasi ausschließlich nach mechanischen und thermodynamischen Kriterien dimensioniert werden. Zudem ist es durch die durchgehende leitfähige Schicht auch möglich, im Wickelkopfbereich Verblockungen zur Schwingungsreduktion anzubringen, ohne die Funktionalität der Leitschicht in Bezug auf ihre Glimmschutzfähigkeit zu beeinträchtigen.

In einer vorteilhaften Ausführungsform der Erfindung ist die elektrisch leitfähige Schicht durch ein elektrisch leitfähiges Band gebildet, mit welchem die Hauptisolierschicht umwickelt ist. Dabei ist das Band derart um die Hauptisolierschicht gewickelt, dass es die Hauptisolierung ununterbrochen umschließt.

In einer weiteren Ausführungsform der Erfindung ist die elektrisch leitfähige Schicht durch einen leitfähigen Lack gebildet, welcher die Hauptisolierung (wiederum ununterbrochen) umschließt.

In einer vorteilhaften Ausführungsform umfasst der Stator eine Leiterschleife mit einer ersten - inneren - leitfähigen Schicht, sowie mit einer zweiten - äußeren - leitfähigen Schicht, wobei zwischen beiden Schichten zweckmäßigerweise eine als Sollbruchstelle dienende Trennschicht eingefügt ist. Die Trennschicht ist insbesondere durch ein gewickeltes Spaltglimmerband gebildet, welches zur Herstellung eines elektrischen Kontakts zwischen äußerer und innerer leitfähiger Schicht von einem elektrisch leitfähigen Kontaktband durchwoben ist.

Für eine besonders rationelle Herstellung ist die elektrisch leitfähige Schicht zweckmäßigerweise in Axialrichtung der Leiterschleife überall gleichartig aufgebaut. Grundsätzlich wäre im Rahmen der Erfindung aber auch denkbar, die elektrisch leitfähige Schicht in verschiedenen Längsabschnitten unterschiedlich auszubilden.

Die erfindungsgemäße elektrische Maschine umfasst einen Stator, der in der vorstehend beschriebenen Weise mit mindestens einer Leiterschleife mit durchgängigem Außenglimmschutz versehen ist. Vorzugsweise erstreckt sich die den Außenglimmschutz bildende leitfähige Schicht ununterbrochen über alle Leiterschleifen des Stators. Lediglich im Bereich derjenigen Anschlussenden der Statorwicklung (also an denjenigen Stabenden, welche nicht mit dem Ende eines weiteren Leiterstabes kontaktiert sind), ist die den Außenglimmschutz bildende leitfähige Schicht durch einen - insbesondere in herkömmlicher Weise ausgeführten - Endenglimmschutz ersetzt. Somit kann bei einer derartigen Maschine in ihrem "Nichtschaltungsbereich" (engl.: Non Connection End, kurz: NCE) vollständig auf einen Endenglimmschutz verzichtet werden, während in ihrem "Schaltungsbereich" (engl.: Connection End, kurz: CE) zumindest teilweise auf einen Endenglimmschutz verzichtet werden kann, so dass eine solche Maschine besonders kostengünstig herzustellen ist.

Nachfolgend wird ein Ausführungsbeispiel der Erfindung anhand einer Zeichnung näher erläutert.

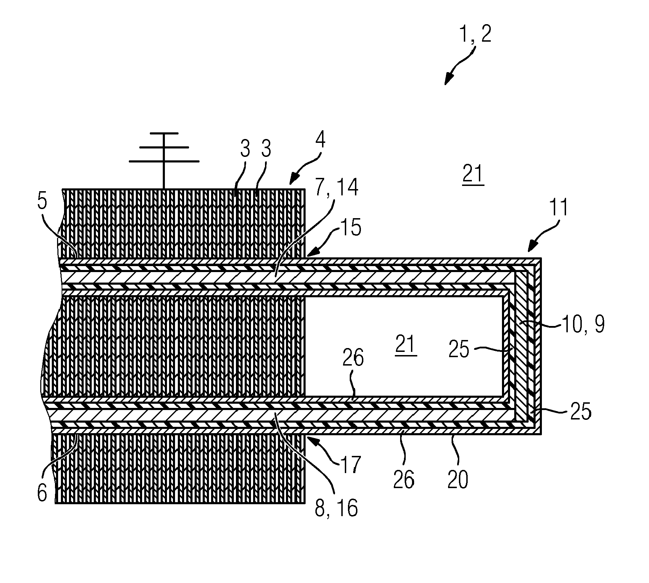

Darin zeigt die einzige Figur in grob schematischer, ausschnitthafter Darstellung eine elektrische Maschine 1 in Form eines Turbogenerators. Die Maschine umfasst einen Stator 2, in dem ein (nicht explizit dargestellter) Rotor drehbar gelagert ist.

Der Stator 2 umfasst ein aus einer Vielzahl von aneinander gereihten, und untereinander isolierten Blechplatten 3 gebildetes (Stator-)Blechpaket 4. In das Blechpaket 4 sind in an sich bekannter Weise quer zur Flächenausdehnung der Blechplatten 3 mehrere durchgehende Nuten eingebracht, von denen in der Darstellung aus Vereinfachungsgründen lediglich zwei (Längs-)Nuten 5,6 dargestellt sind. In der ersten Nut 5 liegt ein erster Leiterstab 7 ein. In der zweiten Nut 6 liegt ein zweiter Leiterstab 8 ein. Beide Leiterstäbe 7,8 sind mittels einer Scheitelendverbindung 9 zu einem elektrisch leitfähigen Kern 10 einer Leiterschleife 11 verbunden.

Jeder Leiterstab 7,8 umfasst wiederum mehrere gegeneinander isolierte, nicht näher dargestellte Kupfer-Teilleiter, die zur Bildung eines sogenannten Roebelstabs miteinander verdrillt sind.

Die gesamte Leiterschleife 11 liegt somit mit einem ersten Nutabschnitt 14 (auch als Aktivbereich des ersten Leiterstabes 7 bezeichnet) in der ersten Nut 4 ein, wobei sie an einem ersten Nutaustritt 15 aus dieser herausragt. Ein zweiter Nutabschnitt 16 (der durch den Aktivbereich des Leiterstabs 8 gebildet ist) der Leiterschleife 11 liegt in der zweiten Nut 6 ein, und tritt an einem zweiten Nutaustritt 17 aus dieser aus. Derjenige Abschnitt der Leiterschleife 11, welcher zwischen dem Nutaustritt 15 und dem Nutaustritt 17 liegt, ist im Folgenden als Wickelkopfabschnitt 20 der Leiterschleife 11 bezeichnet. Während die Leiterschleife 11 in den Nutabschnitten 14,16 somit von dem Blechpaket 4 umgeben ist, ist sie im Wickelkopfabschnitt 20 von einem umgebenden Fluid, hier Luft 21, umgeben.

Zur Isolierung des unter Betriebsbedingungen mit einem Hochspannungspotential beaufschlagten Kerns 10 der Leiterschleife 11 gegenüber dem geerdeten Blechpaket 4 ist der Kern 10 durchgehend mit einem Feinglimmerglasgewebeband umwickelt, das in einem Vakuumtränkverfahren (Global Vacuum Pressure Impregnation) zur Ausbildung einer Hauptisolierschicht 25 mit einem elektrisch isolierenden Harz getränkt ist.

Um die Ausbildung von Potentialspitzen zu vermeiden, und somit die Gefahr von Teilentladungen zu reduzieren, umfasst die Leiterschleife 11 eine leitfähige Schicht 26, welche außenseitig auf die Hauptisolierungsschicht 25 aufgebracht ist, und welche in den Nutabschnitten 14,16 als Außenglimmschutz dient. Die Schicht 26 ummantelt die Hauptisolierschicht 25 vollständig. Sowohl in Längsausdehnung als auch in Umfangsrichtung der Leiterschleife 11 ist die leitfähige Schicht 26 also durchgehend und ununterbrochen ausgebildet. Die Schicht 26 ist dabei insbesondere sowohl in den beiden Nutabschnitten 14,16 als auch in dem Wickelkopfabschnitt 20 auf die Hauptisolierschicht 25 aufgebracht.

Die leitfähige Schicht 26 ist hierbei beispielsweise in der in EP 0 603 212 B1 für die Bildung des Außenglimmschutzes beschriebenen Weise ausgeführt.

Zusätzlich zu der den Außenglimmschutz bildenden Schicht 26 ist vorzugsweise eine weitere leitfähige Schicht (nicht explizit dargestellt) auf die Innenfläche der Hauptisolierungsschicht 25 aufgebracht, die als Innenpotentialsteuerung wirkt. Auch diese innere Schicht erstreckt sich in vorteilhafter Ausführung vollumfänglich und ununterbrochen über beide Nutabschnitte 14, 16 und den zwischengeordneten Wickelkopfabschnitt 20 der Leiterschleife 11. Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

## Patentansprüche

1. Stator (2) für eine elektrische Maschine (1),
- mit einem Blechpaket (4), in welches mindestens eine erste und eine zweite Nut (5,6) eingebracht ist, sowie
- mit einer Leiterschleife (11), umfassend einen von einer Hauptisolierschicht (25) ummantelten leitfähigen Kern (10),
- wobei die Leiterschleife (11) mit einem ersten Nutabschnitt (14) in der ersten Nut (5) des Blechplattenpakets (4) einliegt,
- wobei die Leiterschleife (11) mit einem zweiten Nutabschnitt (16) in der zweiten Nut (6) des Blechpakets (4) einliegt,
- wobei die Leiterschleife (11) mit einem die beiden Nutabschnitte (14,16) miteinander verbindenden Wickelkopfabschnitt (20) aus dem Blechpaket (4) herausragt, und
- wobei die Hauptisolierschicht (25) der Leiterschleife (11) sowohl in den beiden Nutabschnitten (14,16) als auch in dem Wickelkopfabschnitt (20) mit einer durchgehenden elektrisch leitfähigen Schicht (26) ummantelt ist.

2. Stator (2) nach Anspruch 1,
wobei die leitfähige Schicht (26) durch ein elektrisch leitfähiges Band gebildet ist, mit welchem die Hauptisolierschicht (25) umwickelt ist.

3. Stator (2) nach Anspruch 1 oder 2,
wobei die leitfähige Schicht (26) durch einen leitfähigen Lack gebildet ist, welcher die Hauptisolierschicht (25) umschließt.

4. Elektrische Maschine (1) mit einem Stator (2) gemäß einem der Ansprüche 1 bis 3.
